Europäisches Patentamt

European Patent Office

Office européen des brevets

(11) Publication number: **0 354 679**
**A2**

## EUROPEAN PATENT APPLICATION

(21) Application number: **89307455.9**

(22) Date of filing: **21.07.89**

(51) Int. Cl.4: **G11B 5/48**

(30) Priority: **01.08.88 US 226897**

(43) Date of publication of application:
**14.02.90 Bulletin 90/07**

(84) Designated Contracting States:
**DE FR GB IT**

(71) Applicant: **MAGNETIC PERIPHERALS INC.**
**12501 Whitewater Drive**
**Minnetonka Minnesota 55343(US)**

(72) Inventor: **Budy, Gordon Dale**
**1955 Morley Street**
**Simi Valley California 93065(US)**
Inventor: **McNeil, Kenneth Roy**
**918 Emerson Street**
**Thousand Oaks California 91602(US)**

(74) Representative: **Caro, William Egerton et al**
**J. MILLER & CO. Lincoln House 296-302 High**
**Holborn**
**London WC1V 7JH(GB)**

(54) **Method and apparatus for assembling disk drive units.**

(57) An assembly station for assembling a head actuator sub-assembly (14) and a disk sub-assembly (18) of a disk drive unit comprises a head locating device (12) including means (60) for supporting the head actuator sub-assembly, and a disk locating device (16) including means (116) for supporting the disk sub-assembly. The head and disk locating devices are mounted for relative movement towards and away from a predetermined relative position for placing the head actuator sub-assembly and the disk sub-assembly in precise registration with one another for mounting the sub-assemblies in a housing base (22).

FIG. 2

## METHOD AND APPARATUS FOR ASSEMBLING DISK DRIVE UNITS

This invention relates to a method and apparatus for assembling disk drive units for use, for example, in micro-computers, such as personal computers and the like.

In recent years, micro-computers, such as personal and desk top computers, have become extremely popular for a wide variety of business and educational and other uses. Such computers commonly include a main central processor unit having one or more memory storage disks for the storage of data. One popular construction is a Winchester type disk drive unit having multiple storage disks, sometimes referred to as "hard" disks, supported in a stack on a rotary spindle within a substantially sealed disk drive housing. The stacked disks are rotatably driven in unison by a small spindle motor, and at least one electro-magnetic head is displaced by a head actuator assembly to traverse a respective disk surface for the purposes of reading and writing data. Such Winchester type disk drive units are generally preferred in comparison to so-called floppy disk drive units due to their faster operating speeds and the higher memory storage capacities of the hard disks.

The expanding popularity of personal and desk top computers has been accompanied by a demand for Winchester type disk drive units having increased memory storage capacities with rapid read/write performance characteristics. Moreover, a significant market demand has arisen for smaller disk drive units possessing increased memory storage capacities.

As a result, modern disk drive units have become increasingly complex and commonly include multiple storage disks in combination with multiple read/write heads which are mounted within a highly compact disk drive housing. To achieve the desired performance characteristics, extreme precision is required during assembly stages, in which individual disk drive components or sub-assemblies are typically installed one at a time into an open housing member or base. In the past, precise component assembly has been obtained through the use of a substantial quantity of manual labour requiring a high degree of skill and care, thereby inherently limiting production efficiency. Moreover, manual assembly of disk drive components, such as the assembly of multiple disks into precision registry with multiple read/write heads of a head actuator assembly, can be a particularly difficult and tedious process.

In accordance with a first aspect of the present invention, there is provided a disk drive assembly station characterised by a head locating device including means for supporting a head actuator sub-assembly of a disk drive unit, a disk locating device including means for supporting a disk sub-assembly of a disk drive unit, and means mounting the head and the disk locating devices for relative movement towards and away from a predetermined relative position for placing a respective head actuator sub-assembly and a respective disk sub-assembly in precise registration with one another.

An advantage of the present invention is that the components of a disk drive unit may be quickly and easily assembled with precision.

The disk drive assembly station described below features a main platform having separate head and disk locating devices or fixtures mounted on the platform in predetermined spaced relation, with the disk fixture movable towards and away from the head fixture.

Preferably, the head and disk fixtures define respective reference surfaces for receiving and supporting the head actuator sub-assembly and the disk sub-assembly, torque spindles being provided for securely fastening the sub-assemblies in firmly seated relation with the surfaces. The disk sub-assembly typically comprises a plurality of memory storage disks arranged in a stack, and a transfer tool is conveniently provided for facilitating manual or automated handling of the disk sub-assembly in order to place the disk sub-assembly on the disk fixture. Such transfer tool is designed to prevent disk damage or contamination by guarding against contact of the disk surfaces with foreign objects.

The described disk fixture is supported on the platform by a bearing unit which supports the disk fixture for substantially straight line displacement towards and away from the head fixture. A push bar carried by the disk fixture is operable for causing such displacement. Stop members located respectively on the disk fixture and the main platform are inter-engageable to define a precise stopping point when the disk fixture is displaced towards the head fixture.

The head actuator sub-assembly typically comprises a plurality of read/write heads in spaced relation with one another and, as described, the head actuator sub-assembly is mounted on the head fixture together with a shipping comb for maintaining the read/write heads in such spaced relation. A loading comb is carried by a comb support arm pivotally mounted on the platform for swinging movement into registration with the head actuator sub-assembly. The loading comb includes tapered comb teeth for maintaining the read/write heads in their spaced relation initially while the shipping comb is removed and subsequently as the disk fixture is translated along the platform to move the disk sub-assembly into registration with the head actuator sub-assembly. When such registration is achieved, the loading comb is retracted whereby the tapered comb teeth gradually release the read/write heads to land gently within outer landing zones on the surfaces of the memory storage disks.

Subsequently, a housing base may be installed quickly and easily over the sub-assemblies and may be appropriately fixed in place by suitable fasteners. In the described embodiment, housing pins up-standing from the platform are provided for reception through preformed ports in such a housing base to pre-align the housing base with the underlying sub-assemblies. The housing pins guide the housing base into precision engagement with the sub-assemblies for simple connection. One or more of the housing pins may be carried on the platform by a swing arm for movement to an out of the way position prior to installation of the housing base.

Before such installation, additional components of the disk drive unit are advantageously installed on the platform at predetermined locations. These components may include, for example, a solenoid unit and a magnet unit for operative inter-action with the head actuator sub-assembly during normal operation of the disk drive unit. Subsequent to housing base installation, the entire platform may be inverted to expose selected interior regions of the now underlying housing base through platform openings. Appropriate fasteners may then be inserted through these platform openings for securely fixing the disk drive components to the housing base.

With the platform in an inverted position, the sub-assemblies may be coupled to test means for rotatably driving the memory storage disks relative to the head actuator sub-assembly. Preferably, such rotatable driving of the disks causes the read/write heads to fly in slightly spaced relation with respect to the outer landing zones on the associated disk surfaces. During this operation, the head actuator sub-assembly is manually displaced to shift the read/write heads into alignment with inner landing zones on the associated disk surfaces for conventional parking at such inner landing zones. The solenoid unit may be adjusted as required to lock or park the heads. The platform is then returned to the original upright orientation, whereupon the torque spindles are released from the respective sub-assemblies to permit removal of the partially assembled disk drive unit from the assembly station. Such removal is achieved quickly and easily by lifting the housing base upwardly guided by the housing pins to ensure straight lift off of the sub-assemblies from the platform. The thus partially assembled disk drive unit then includes the head actuator and disk sub-assemblies mounted in precision registration within the housing base.

In accordance with a second aspect of the present invention, there is provided a method of assembling a disk drive unit characterised by mounting a head actuator sub-assembly on a head locating device, mounting a disk sub-assembly on a disk locating device, relatively moving the head locating device and the disk locating device towards a predetermined relative position in which the head actuator sub-assembly and the disk sub-assembly are in precise registration with one another, and mounting a housing base on the head actuator and disk sub-assemblies.

The invention is described further, by way of example, with reference to the accompanying drawings, in which:-

Figure 1 is a top plan view illustrating a disk drive assembly station embodying the present invention;

Figure 2 is a top plan view similar to Figure 1 but illustrating a head actuator sub-assembly and a disk sub-assembly of a disk drive unit installed on the assembly station;

Figure 3 is a perspective view illustrating installation of a housing base on the head actuator and disk sub-assemblies supported on the assembly station;

Figure 4 is an enlarged fragmentary end view taken on the line 4 - 4 of Figure 3;

Figure 5 is a fragmentary vertical section taken on the line 5 - 5 of Figure 4;

Figure 6 is a fragmentary vertical section taken on the line 6 - 6 of Figure 5;

Figure 7 is an enlarged fragmentary vertical section taken on the line 7 - 7 of Figure 2;

Figure 8 is an enlarged fragmentary vertical section corresponding generally with the encircled region 8 of Figure 7;

Figure 9 is an enlarged fragmentary horizontal section taken on the line 9 - 9 of Figure 7;

Figure 10 is an enlarged fragmentary vertical section taken on the line 10 - 10 of Figure 13;

Figure 11 is an enlarged fragmentary vertical section taken on the line 11 - 11 of Figure 2;

Figure 12 is an enlarged fragmentary vertical section taken on the line 12 - 12 of Figure 2;

Figure 13 is a top plan view of the assembly station corresponding generally with Figure 2, but illustrating displacement of the disk sub-assembly into precision registration with the head actuator sub-assembly;

Figure 14 is an enlarged fragmentary vertical section taken on the line 14 - 14 of Figure 13;

Figure 15 is an enlarged fragmentary vertical section corresponding generally with the encircled region 15 of Figure 14;

Figure 16 is an enlarged fragmentary vertical section taken on the line 16 - 16 of Figure 1;

Figure 17 is a top plan view corresponding generally with Figure 13, but illustrating displacement of a solenoid unit into a final mounting position in relation to the head actuator sub-assembly;

Figure 18 is an enlarged fragmentary vertical section taken on the line 18 - 18 of Figure 13;

Figure 19 is a plan view illustrating a main platform of the assembly station in an inverted orientation;

Figure 20 is a schematic plan view depicting the mounting of components associated with the head actuator sub-assembly and related solenoid unit;

Figure 21 is a fragmentary vertical section taken on the line 21 - 21 of Figure 20;

Figure 22 is a fragmentary vertical section taken on the line 22 - 22 of Figure 20; and

Figure 23 is a fragmentary horizontal section taken on the line 23 - 23 of Figure 22.

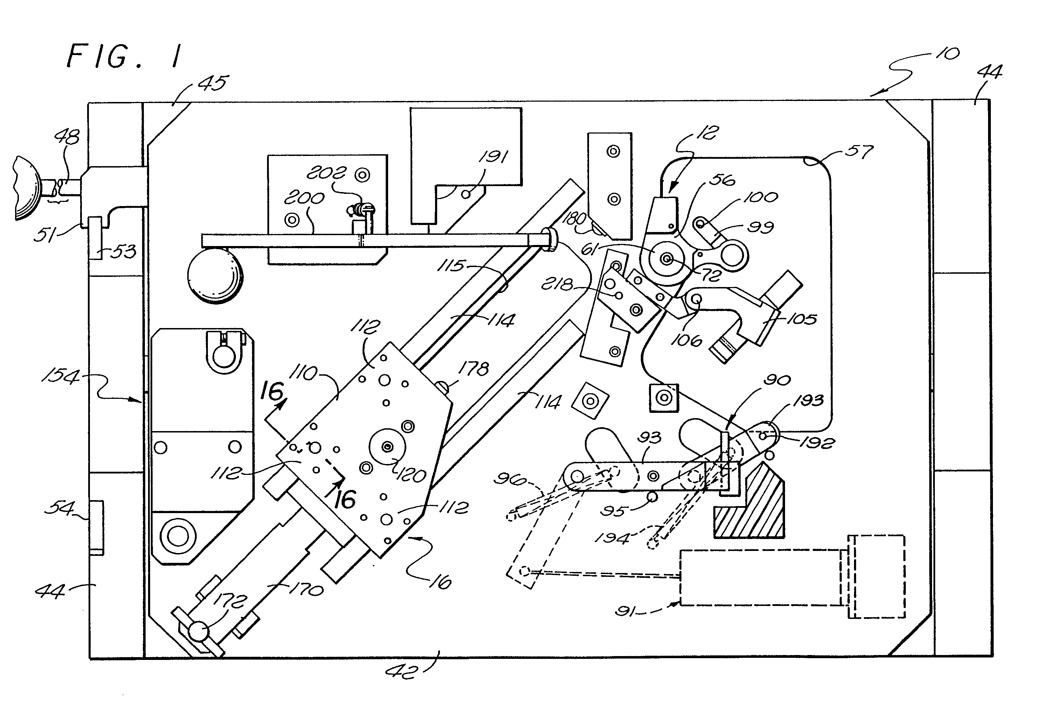

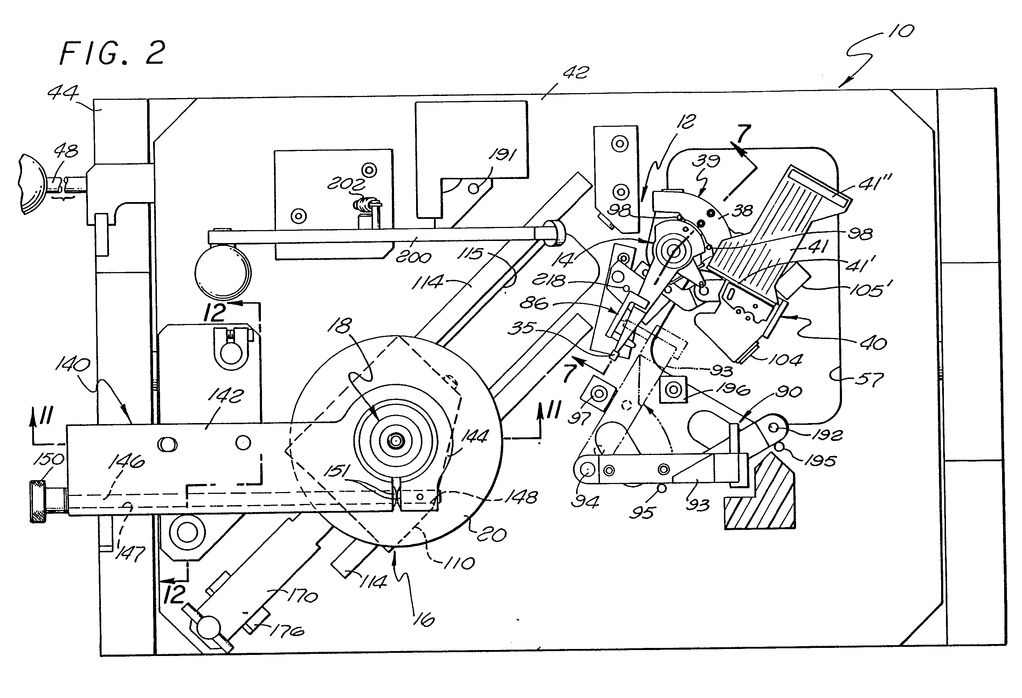

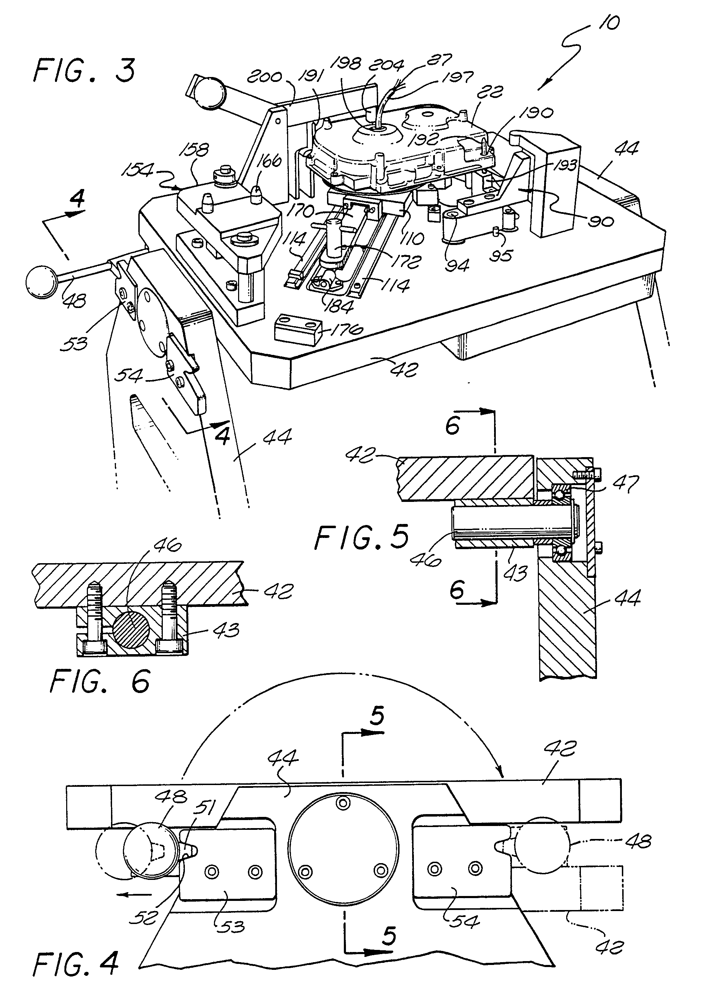

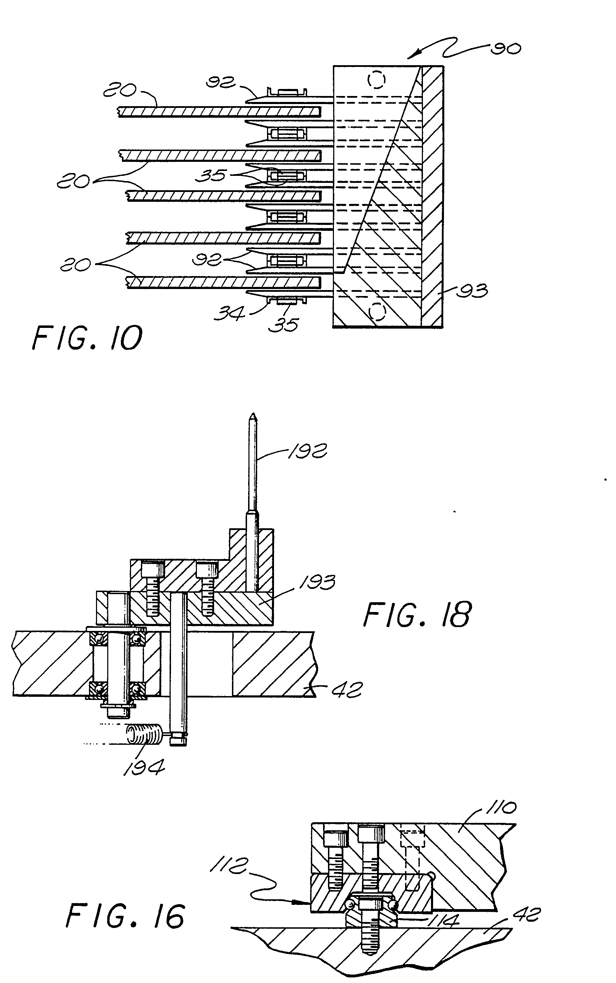

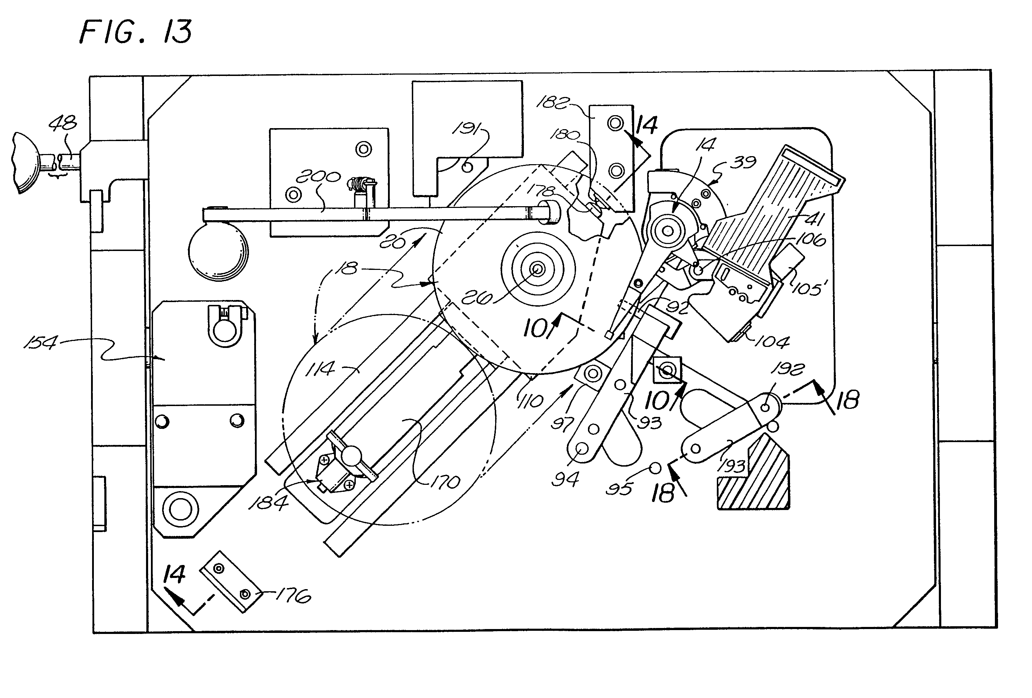

As shown in the drawings, a disk drive assembly station, generally designated 10 in Figures 1 to 3, is provided for facilitating precision assembly of key components of a disk drive unit of the type used in modern micro-computers such as personal and desk top computers and the like. The assembly station 10 includes a head fixture 12 for precision support of a head actuator sub-assembly 14, as depicted in Figures 2 and 3. In addition, the station 10 includes a movable disk fixture 16 for supporting a disk sub-assembly 18 (Figure 2) which may include multiple memory storage disks 20 arranged in a vertical stack (Figure 10). The disk fixture 16 accommodates displacement of the supported disk sub-assembly 18 into precise positional registry with the head actuator sub-assembly 14 (Figure 13) to facilitate subsequent mounting of both sub-assemblies 14 and 18 within a housing base 22 (Figure 3) of a computer disk drive unit.

The disk drive assembly station 10 of the present invention advantageously provides a relatively compact and easily manipulated arrangement for quickly and easily assembling key or precision components of a computer disk drive unit or the like. The assembly station 10 includes appropriate support members at predetermined and precisely spaced locations for securely and safely supporting disk drive components for facilitated precision assembly. More specifically, a variety of disk drive components can be placed accurately and safely onto the head and disk fixtures 12 and 16 to orient these components in fixed predetermined relation to each other. The fixtures maintain the disk drive components in the desired positions during mounting in the housing base 22 which comprises a portion of a conventional, substantially sealed housing for the disk drive unit. Most importantly, the head actuator sub-assembly 14 and the disk sub-assembly 18 are securely retained in precise registration during mounting of the housing base such that substantially optimised co-operative inter-action between these sub-assemblies may be achieved during operation of the disk drive unit in the course of storing and/or retrieving data.

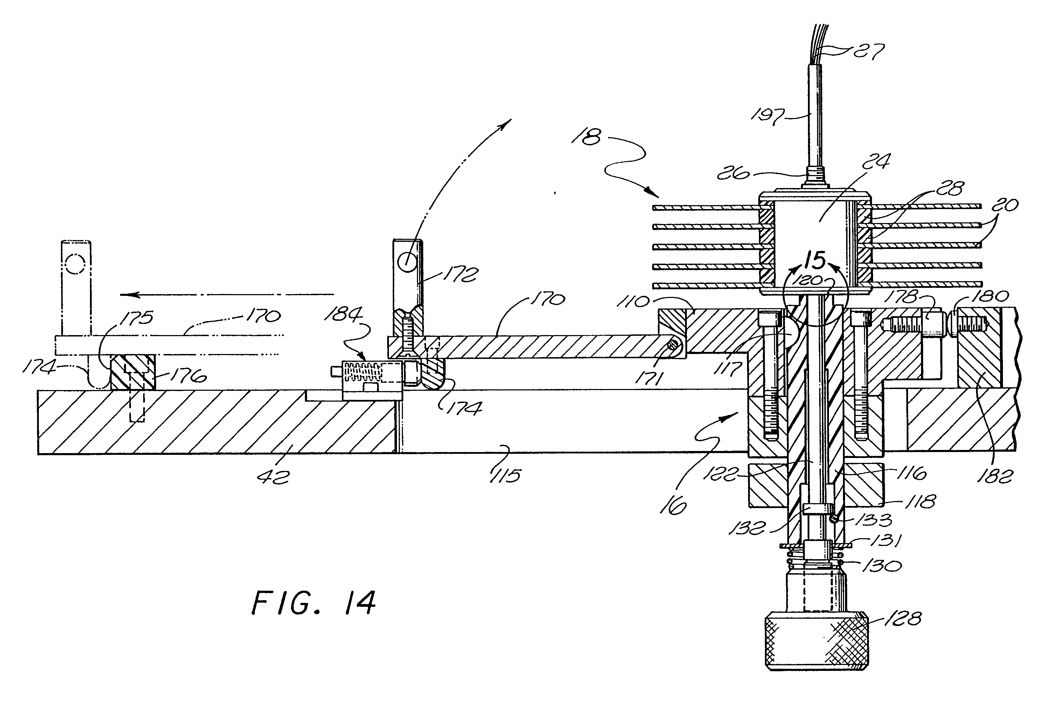

Although a fully assembled disk drive unit is not shown in detail in the accompanying drawings, the assembly station 10 is particularly designed for use with disk drive units having a plurality of the memory storage disks 20 arranged in a common stack to define the disk sub-assembly 18. More particularly, as shown in Figure 14, the disk sub-assembly 18 comprises a central cylindrical hub 24 encasing a built-in spindle drive motor having an axially elongated stator shaft 26. During disk drive operation, the stator shaft 26 is securely anchored, for example by mounting its opposite ends to components of the disk drive housing (not shown in Figure 14) and electrical power is appropriately supplied to the spindle motor via plural leads 27 projecting from one end of the stator shaft 26. During spindle motor operation, the hub 24 is rotatably driven at a selected speed, typically about 3600 rpm, to correspondingly rotatably drive the supported stacked plurality of the memory storage disks 20 in unison. Spacer rings 28 are inter-posed between the storage disks 20 to permit the upper and lower disk surfaces to be accessed by appropriate servo and/or read/write heads, as will be described in more detail below. Any number of memory storage disks may be used, with Figure 14 depicting five disks 20 arranged in a co-axial stack. Further details regarding the disk sub-assembly and the spindle drive motor may be found in co-pending European Application No. 89301685.7.

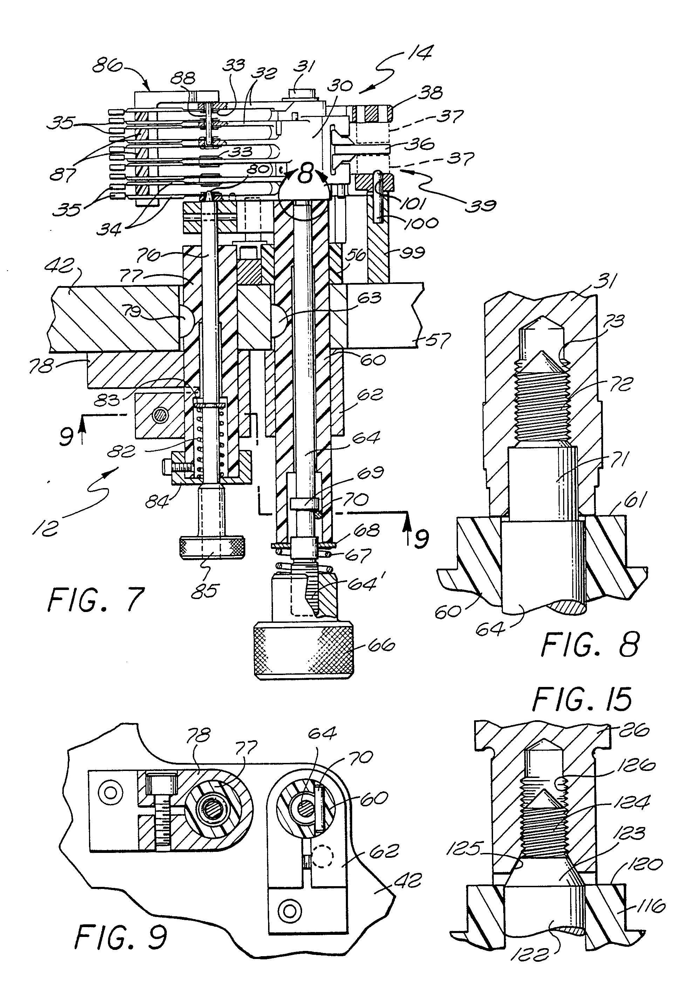

The head actuator sub-assembly 14, as best seen in Figure 7, comprises a cast or machined casing 30 supported for rotation by means of an appropriate bearing (not shown) about a central support shaft 31. At least one and preferably both ends of the support shaft 31 are adapted for connection to the disk drive housing to orient the casing 30 for rotation about an axis generally parallel to the stator shaft 26 of the associated disk sub-assembly 18. The actuator casing 30 includes a plurality of relatively stiff casing arms 32 which radiate outwardly along a common azimuth and are secured by stake rings 33 or the like to a corresponding plurality of flexure arms 34. These flexure arms 34 in turn support electro-magnetic read/write heads 35 or the like. As is known in the art, during operation of the disk drive unit, the heads 34 are positioned respectively in close proximity with individual surfaces of the associated memory storage disks 20 for the purposes of reading and/or writing data. In the drawings, a total of six casing arms 32 is shown, with the upper and lower casing arms carrying single flexure arms 34 and associated heads 35 for respective association with the uppermost and lowermost storage disk surfaces of the sub-assembly 18. The remaining casing arms 32 each carry a pair of the flexure arms 34 which support read/write heads 35 oriented in opposite facing directions for association respectively with the immediately overlying and underlying storage disk surfaces. When supported in registry with the disk sub-assembly 18, the read/write heads 35 are thus inter-leaved within the spaces between the storage disks 20 (Figure 10), with the heads 35 disposed in individual read/write association with the storage disk surfaces. Further details regarding the actuator sub-assembly 14 may be found in co-pending European Application No. 89301684.0.

The head actuator sub-assembly 14 further includes means for controllably displacing the heads 35 through radial traverses relative to the storage disks 20 of the disk sub-assembly 18. While the particular mechanisms and methods used to obtain such displacement may vary, the accompanying drawings illustrate a movable coil DC motor having a bobbin coil 36 carried by the actuator casing 30. The bobbin coil 36 is supported, during normal disk drive operation, in magnetically coupled association with permanent magnets 37 (Figure 7) mounted within a housing 38 of a magnet unit 39. A solenoid unit 40 (Figure 2) is also included as part of the head actuator sub-assembly and includes a flex cable 41 for supplying signals from a system controller (not shown) to the bobbin coil 36 so as to cause displacement of the coil through an arcuate path in magnetically coupled relation with the permanent magnets 37. Such displacement effectively translates the read/write heads 35 through radial traverses relatively to the associated disks 20. In addition, as is known in the art, the flex cable 41 carries appropriate read/write signals to or from the plurality of heads 35. In this regard, the flex cable is shown to include an inboard connector fitting 41' anchored to a suitable location on the solenoid unit 40, and an outboard connector fitting 41" for appropriate coupling to the system controller at a position outside the housing of the disk drive unit.

The disk drive assembly station 10 of the present invention is particularly designed for facilitating precision assembly of all the above described disk drive components into the housing base 22 (Figure 3). The assembly station supports the various components in predetermined, precise positions to accommodate simplified housing base affixation without requiring positional adjustment of the components during or after assembly. The relative dimensions are fixed by the assembly station 10. Moreover, the assembly station 10 is adapted for facilitating manual assembly of the disk drive components, or for integration into an appropriate automated assembly process.

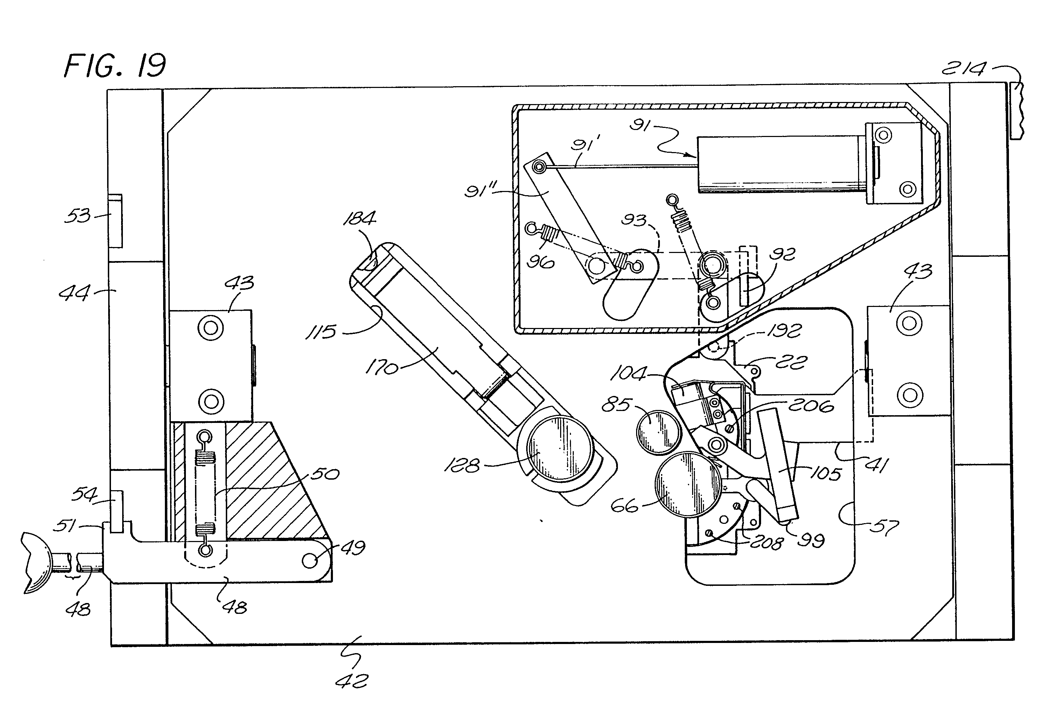

With reference to Figures 1 to 6, the disk drive assembly station 10 comprises a generally horizontally oriented platform 42 supported between left and right support standards 44. These support standards are adapted in turn for appropriate connection to an underlying support frame or base 45 which is suitably anchored in a stationary position. The platform 42 is supported from the standards 44 by a pair of co-axially aligned journal pins 46 (Figures 5 and 6) which are secured to the underside of the platform by clamp units 43 and project outwardly for reception into rotatable bearings 47 on the support standards 44. A lock lever 48 has an inboard end pivotally connected to the underside of the platform 42 by a pin 49 (Figure 19), and a spring 50 acts between the lever 48 and the platform 42 to swing the lever 48 in a direction seating a lever tooth 51 normally into a notched seat 52 (Figure 4) formed in a lock bracket 53 mounted on the adjacent support standard 44. The lock lever 48 may be withdrawn manually from the bracket seat 52 to permit platform rotation about the axis of the journal pins 46, thereby permitting platform inversion and corresponding reception of the lever tooth 51 into a notched seat in a second bracket 54 on the standard, as shown in dotted lines in Figure 4. Inversion of the platform 42 is performed during a latter stage of assembly of the disk drive unit, as will be described in more detail below.

The head fixture 12 comprises a plurality of relatively small support members mounted on the platform 42 and co-operatively defining a series of upwardly presented surfaces for seated support of the head actuator sub-assembly 14 and related components. For convenience and ease of description, these support members will be collectively referred to herein as a base plate, identified by the reference numeral 56. More specifically, with reference to Figures 1, 2 and 7 to 9, this base plate 56 is suitably mounted by screws or the like onto the platform 42 at a position disposed generally along one side margin of a platform opening 57. An upright, generally cylindrical support sleeve 60 extends perpendicularly through the platform 42 and the base place 56 to define an upwardly presented annular reference surface 61 (Figure 8). The support sleeve 60 is firmly engaged by a clamp unit 62 attached to the underside of the platform 42, as shown in Figure 9, and appropriately adjusted to ensure precision placement of the reference surface 61 in accordance with the desired geometry of the disk drive unit being assembled. A key 63 may also be provided within aligned key ways on the support sleeve 60 and the platform 42 to lock the support sleeve 60 positively against rotation relative to the platform.

An elongated torque spindle 64 extends co-axially through the support sleeve 60 for use in attachment of the head actuator sub-assembly 14 to the head fixture 12. As shown in Figures 7 to 9, this torque spindle 64 comprises an elongated shaft rotatably received through a bore formed in the support sleeve 60. A lower end 64' of the torque spindle 64 is threaded for screw on attachment of an enlarged head 66 which conveniently includes external knurling or the like for easy manual grasping and rotation. A compression spring 67 acts between a washer 68 at the lower end of the support sleeve 60 and an upwardly presented shoulder on the head 66 to urge the entire torque spindle 64 downwardly within the support sleeve 60. A raised spool 69 or the like on the torque spindle 64 is engagable with a stop key 70 extending transversely within the support sleeve 60 to define a lower end limit to movement of the torque spindle 64.

The upper end of the torque spindle 64 is shaped to define a cylindrical land 71 (Figure 8) of reduced diametric size. The land 71 projects upwardly a short increment above the adjacent reference surface 61 on the support sleeve 60. The upper extent of the land 71 joins with a threaded upper tip 72 for threaded attachment to the head actuator sub-assembly. Such threaded attachment is achieved by engaging the tip 72 within a threaded bore 73 at one end of the support shaft 31 of the head actuator sub-assembly 14. In this regard, in the preferred form of the invention, the threaded bore 73 is formed in the upper end of the support shaft 31, whereby the head actuator sub-assembly is installed onto the head fixture 12 in an inverted orientation, as viewed in Figure 7. Rotation of the torque spindle 64 is obtained easily by grasping and rotating the spindle head 66 at a position below the platform 42 to draw and seat the axially uppermost end of the support shaft 31 firmly onto the reference surface 61 at the upper end of the support sleeve 60. When the tip 72 is threaded into the shaft bore 73 with a predetermined torque load, the compression spring 67 permits over-ride rotation of the head 66 relative to the spindle 64 to prevent over tightening.

A spring loaded alignment pin 76 is also provided for registration with the head actuator sub-assembly 14 to ensure precise initial placement of the sub-assembly 14 on the head fixture 12. More specifically, as shown in Figures 7 and 9, the alignment pin 76 is carried for axial sliding movement within a guide sleeve 77 which extends generally perpendicularly through the platform 42 at a position closely adjacent to the support sleeve 60.

This guide sleeve 77 is suitably mounted on the platform to extend generally perpendicularly therethrough by means of a clamp unit 78 or the like fastened onto the underside of the platform. A key 79 may also be provided to prevent relative rotation of the guide sleeve with respect to the platform 42.

The alignment pin 76 protrudes upwardly through the base plate 56 and terminates in a tapered upper tip 80 for reception into a port defined, for example, by the stake ring 33 anchoring the adjacent upper flexure arm 34 of the sub-assembly 14. The tip 80 is spring biased for normal reception into the stake ring port by means of a lower compression spring 82 acting between a stop ring 83 on the pin 76 and an inboard surface of a sleeve cap 84 mounted on the lower end of the guide sleeve 77. A head 85 is secured to the exposed lower end of the alignment pin 76 in a position for easy manual grasping below the platform to withdraw the pin tip 80 from the adjacent stake ring port. However, when the head 85 is released, the spring 82 urges the alignment pin 76 upwardly within the guide sleeve 77, thereby displacing the tapered tip 80 into the stake ring port. As a result, the alignment pin 76 co-operates with the torque spindle 64 for normally locking the inverted head actuator sub-assembly 14 in position on the head fixture 12.

The stake rings 33 on the plurality of actuator arms 32 conventionally define a vertically aligned series of stake ring ports. These stake rings 33 provide a convenient mounting structure for a shipping comb 86 having a plurality of spaced teeth 87. The comb teeth 87 are interposed between the multiple flexure arms 34 to maintain the read/write heads 35 in spaced relation during manufacturing and/or shipping. The shipping comb 86 is best seen in Figures 2 and 7, and is normally secured in a releasable manner to the head actuator sub-assembly 14 by means of a short mounting post 88 received through the ports in two or more of the stake rings 33. As shown in Figure 7, the mounting post 88 is received through the stake rings located generally opposite the alignment pin 76 when the subassembly 14 is installed onto the head fixture 12. With this arrangement, the head actuator sub-assembly 14 can be installed on the disk assembly station 10 without requiring prior removal of the shipping comb 86.

The shipping comb 86 is removable quickly and easily from the head actuator sub-assembly 14 subsequent to sub-assembly mounting on the head fixture 12. More particularly, as shown in Figures 1, 2, 10 and 13, a loading comb 90 includes a plurality of comb teeth 92 disposed in a vertical spaced array at the distal end of a comb pivot arm 93. This pivot arm 93 is pivotally mounted by a pin 94 on the main platform 42 in a manner accommodating swinging movement of the loading comb 90 into or away from registration with the head actuator sub-assembly 14 on the head fixture 12. When the head actuator sub-assembly 14 is being secured on the head fixture 12, the comb pivot arm 93 rests at an out of the way position, as shown in solid lines in Figure 2, to space the loading comb teeth 92 a substantial distance from the sub-assembly 14. A limit post 95 on the platform 42 conveniently provides a stop engaging the comb arm 93 in this out of the way position. An over centre spring 96 (Figures 1 and 19) secured between the platform 42 and the comb arm 93 effectively retains the arm 93 against the limit post 95.

However, subsequent to sub-assembly mounting on the head fixture 12, the comb pivot arm 93 is pivoted to displace the comb teeth 92 towards the flexure arms 34 of the head actuator sub-assembly 14. As shown in Figure 10, the leading edges of the comb teeth 92 are appropriately tapered to fit smoothly into the spaces between the flexure arms 34 in a manner retaining the operating surfaces of the read/write heads 35 out of contact with each other. Further advancement of the comb teeth 92 (shown in dotted lines in Figure 2) effectively releases the teeth 87 of the shipping comb 86. This permits relatively easy shipping comb removal by simple pivoting of the comb teeth 87 away from the heads 35 and appropriate lifting of the comb post 88 from the stake rings 33. The removed shipping comb 86 may be discarded, or re-used, as desired. A second limit post 97 on the platform 42 prevents over travel of the loading comb pivot arm 93 (Figure 2). Moreover, as shown in Figures 1 and 19, a dashpot assembly 91 is conveniently mounted on the underside of the platform 42 and has a ram 91' coupled through a link 91" to the comb pivot arm 93 to ensure gentle swinging movement of the pivot arm in either direction relative to the head fixture 12.

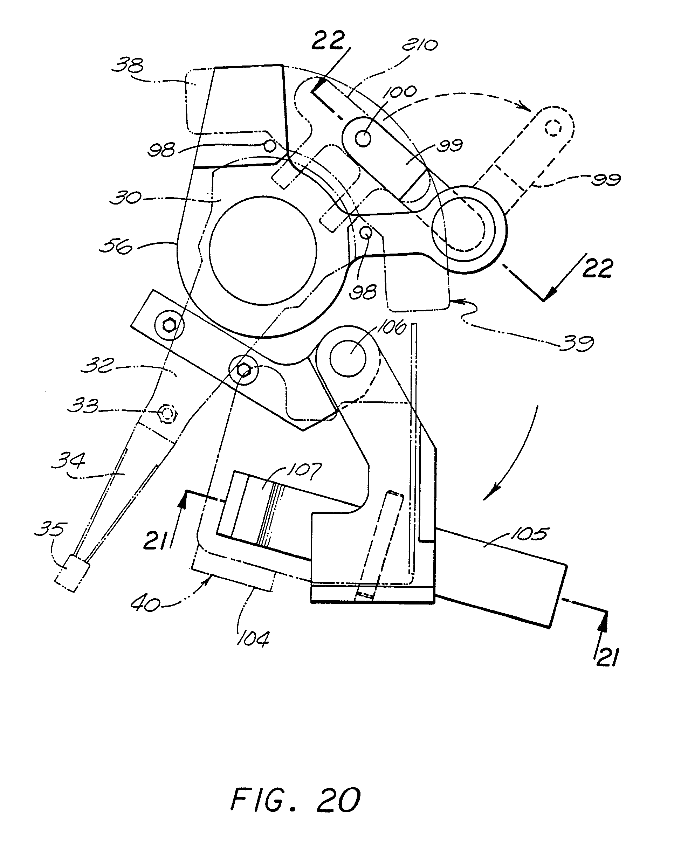

Additional disk drive unit components are also installed at the rear of the head actuator sub-assembly 14 to position the magnets 37 in operative relation with the bobbin coil 36, as viewed in Figures 2, 7, 13 and 17. In this regard, for secure and precise support of the magnet unit 39, the fixture base plate 56 includes a pair of up-standing locator pins 98 (Figure 20) positioned adjacent to the casing 30 of the supported head actuator sub-assembly 14. In addition, a pivot link 99 (Figures 20, 22 and 23) pivotably mounted on the base plate 56 includes an up-standing post 100 for reception in a port 101 in the magnet housing 38 to support the magnet unit 39 in registry with the bobbin coil 36 (Figure 7). As viewed in Figures 20, 22 and 23, this pivot link 99 is normally locked in an out of the way position (dotted lines in Figure 20) by means of a retainer pin 102 urged by a spring unit 103 into a slot 102' in the base plate. However, with the magnet unit 39 seated against the locator pins 98, the retainer pin 102 can be retracted from the slot 102' to permit pivot link rotation to a secondary position with the post 100 aligned for reception in the magnet housing port 101 (solid lines in Figure 20). In this secondary position, the pivot link 99 is released whereupon the spring unit 103 urges the post 100 into the housing port 101 to hold the magnet unit 39 in place. A second slot 102" in the base plate receives the retainer pin 102 to releasably lock the pivot link 99 and the supported magnet housing in place.

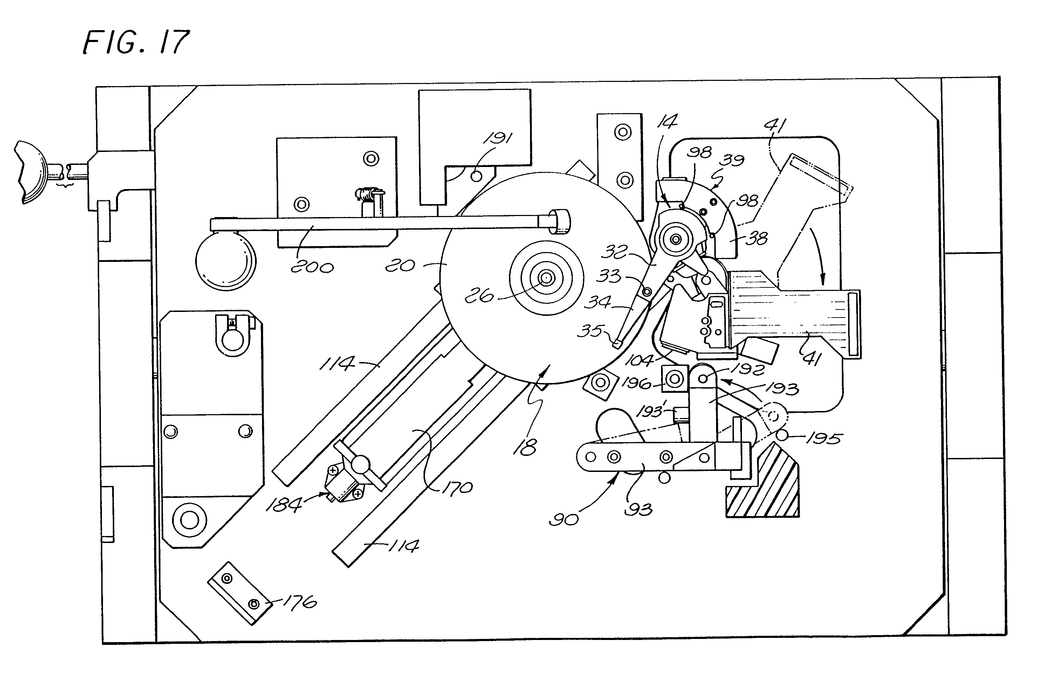

The head actuator sub-assembly 14 additionally includes the solenoid coil 40 with associated flex cable 41 and a solenoid latch mechanism 104. These components are mounted generally to one side of the actuator casing 30, as viewed in Figures 2, 13, 17, 20 and 21. A solenoid support bracket 105 projects laterally from one side of the base plate 56 in generally cantilevered relation over the platform opening 57. This support bracket 105 is geometrically shaped for rested, seated support of the solenoid latch mechanism 104 and the associated flex cable 41, with the flex cable folded in a direction generally away from the head fixture 12 (Figure 2). As shown best in Figures 13, 17, 20 and 21, the solenoid support bracket 105 is beneficially mounted on the platform 42 by a pivot pin 106 or the like for initially supporting the solenoid unit 40 in a position pivoted away from the head actuator sub-assembly (Figures 1 and 13). However, immediately prior to installation of the housing base 22, the solenoid bracket 105 is pivoted in a direction swinging the solenoid unit 40 towards the sub-assembly 14 (Figures 17, 20 and 21) for fastening into the housing base 22, as will be described.

The disk fixture 16 includes a separate base plate 110 adapted to receive and support the disk sub-assembly 18. This base plate 110 is movably mounted with respect to the platform 42. With this construction, the disk sub-assembly 18 can be installed on the base plate 110 in an initial position spaced sufficiently from the head fixture 12 to prevent accidental contact of the sub-assemblies with each other. However, while the flexure arms 34 of the head actuator sub-assembly 14 are appropriately held in spread relation by the loading comb 90, the disk fixture 16 including the base plate 110 is movable quickly and easily to displace a supported disk sub-assembly 18 into precise registration with the multiple read/write heads 35 of the head actuator sub-assembly 14.

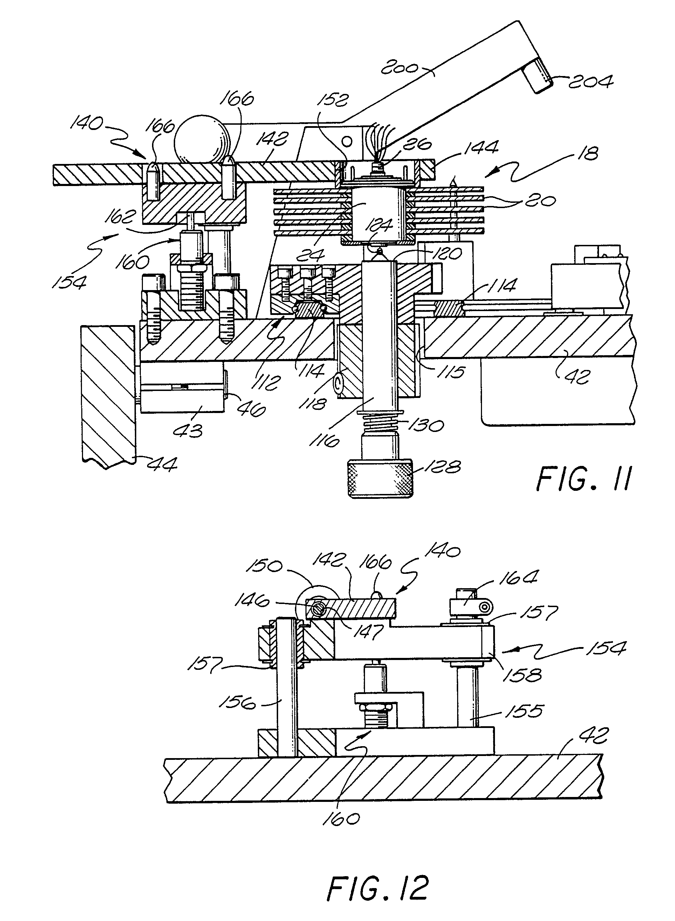

More specifically, with reference to Figures 1 to 3 and 11 to 17, the base plate 110 is supported by a plurality of three or more linear bearing units 112 for substantially straight line sliding displacement along a pair of parallel guide rails 114 mounted securely upon the platform 42. As shown in Figures 11 and 14, the base plate 110 is supported over an elongated opening 115 in the platform 42. An upright support sleeve 116 is secured to the base plate 110 by means of a clamp unit 118 or the like to extend generally perpendicularly through the platform opening 115 and the base plate 110. A key 117 may also be provided to lock the support sleeve 116 against rotation with respect to the base plate 110. A support sleeve 116 defines an upwardly presented annular reference surface 120 (Figures 11 and 15) which surrounds an elongated torque spindle 122 passing co-axially through the support sleeve 116. The upper end of the torque spindle 122 defines a tapered truncated conical seat 123 (Figure 15) of relatively fine tolerance dimensions and which merges into an upwardly projecting threaded tip 124. The geometry of the conical seat 123 and the threaded tip 124 are adapted for precision threading advancement into a tapered entrance 125 leading to a threaded bore 126 formed in the stator shaft 26 of the disk sub-assembly 18.

When the disk sub-assembly 18, including the stacked array of memory storage disks 20, is mounted on the disk fixture 16, the disk sub-assembly 18 is oriented in a inverted position for thread in advancement of the torque spindle tip 124 into the upper end of the stator shaft 26. Such threaded advancement is achieved by grasping and rotating an enlarged head 128 threaded onto a threaded lower end of the torque spindle 122 (Figure 14) at a position below the platform. A compression spring 130 acts between a washer 131 seated against the lower end of the support sleeve 116, and an upper shoulder on the head 128 to urge the torque spindle downwardly within the support sleeve 116 with a predetermined spring force. An enlarged spool 132 on the torque spindle 122 is engageable with a stop key 133 inserted through the support sleeve 116 to provide a lower end limit stop to torque spindle motion within the support sleeve. Accordingly, threaded advancement of the tip 124 into the stator shaft 26 draws the end of the stator shaft into seated relation with the reference surface 120 with a limited force controlled by the design characteristics of the spring 130. When that force is achieved, further rotation of the head 128 occurs relative to the torque spindle 122.

A transfer tool 140 may be provided for facilitating handling of the disk sub-assembly 18 during mounting thereof on the disk fixture 16. The transfer tool 140, as best seen in Figures 2, 11 and 12, comprises an elongated and relatively rigid tool body 142 having a split clamp head 144 at one end thereof. A clamp screw 146 extends through an elongated smooth bore 147 in the tool body to bridge the split in the clamp head 144 for threading into a threaded bore 148 (Figure 11). When the clamp screw 146 is advanced into the threaded bore 148, a head 150 on the screw bindingly engages a rear tool face to cause a pair of facing stops 151 at the clamp head split to be drawn into abutting engagement with each other (Figure 2). When the stops 151 are engaged, an interior surface 152 of the clamp head 144 bindingly engages a relatively rigid structural peripheral portion of the hub 24 of the disk sub-assembly 18 for securely holding the sub-assembly without the use of direct manual assistance. With this transfer tool 140, the disk sub-assembly 18 can be handled and transferred manually or with automated equipment for rapid and accurate placement onto the disk fixture 16 in an inverted position.

A tool support stand 154 is mounted on the platform 42 for receiving the transfer tool 140 having a disk sub-assembly 18 loaded therein. As viewed in Figures 1, 11 and 12, the tool stand 154 includes a pair of up-standing guide posts 155 and 156 projecting upwardly from the platform 42 to extend slidably through bearings 157 (Figure 12) carried by an upper plate 158. A dashpot unit 160 on the platform 42 has a spring loaded ram 162 for urging the plate 158 to a position near the upper ends of the posts 155 and 156, and a clamp unit 164 or the like is fastened onto the upper end of the post 155 to prevent plate removal therefrom. An upper face of the plate 158 defines a relatively flat support surface for rested reception of the transfer tool 140. Guide pins 166 project upwardly from the plate 158 through aligned ports in the transfer tool body such that the disk sub-assembly 18 carried by the transfer tool is disposed in alignment over the torque spindle 122 of the disk fixture 16. Threaded advancement of the spindle tip 124 draws the disk stack firmly onto the reference surface 120, as previously described, with such draw down motion being resisted by the support stand dashpot unit 160 to ensure smooth motion without jarring or jolting which could otherwise damage the fragile disk sub-assembly.

As shown in Figures 1, 2, 13 and 14, the disk sub-assembly 18 is mounted on the disk fixture 16 while the fixture is positioned in significantly spaced relation from the head fixture 12. A push bar 170 is connected by a pivot pin 171 to an outboard side edge of the base plate 110 and projects upwardly therefrom in a direction generally away from the head fixture 12. This push bar 170, as shown in Figures 3 and 14, includes an up-standing handle 172 for easy manual grasping to displace the entire fixture 16 along the guide rails 114 towards and away from the head fixture 12. In an initial position, as shown in dotted lines in Figure 14, a depending lock tab 174 on the push bar 170 seats against an outboard side face 175 of a raised stop member 176 mounted on the platform 42.

However, subsequent to securement of the disk sub-assembly 18 onto the disk fixture 16, the push bar 170 is pivoted upwardly from the dotted line position (Figure 14) and used as a push handle for displacing the disk fixture 16 along the guide rails 114 in a direction towards the head actuator sub-assembly 14 on the head fixture 12. A pair of hardened stops 178 and 180 such as the heads of a pair of screws on the base plate 110 and on a stop plate 182, respectively, are engageable to define a precise stop point for the disk fixture 16 to orient the disk sub-assembly in precise registration with the head actuator sub-assembly. In this position, the memory storage disks 20 of the disk sub-assembly 18 are disposed in predetermined and inter-leaved registry with the read/write heads 35, as shown in Figure 10. When this position is reached, the push bar 170 is pivoted downwardly towards the solid line position viewed in Figure 14 to seat the stop tab 174 engaged in front of a spring loaded lock button unit 184 mounted on the platform. This lock button unit 184 beneficially retains the disk fixture 16 in a position with the stops 178 and 180 securely engaged to maintain the disk and head actuator sub-assemblies in precision registration seated respectively on the head and disk fixtures.

With the head actuator and disk sub-assemblies 14 and 18 in registered relation, the loading comb 90 (Figure 10) is retracted from the flexure arms 34. Such retraction is obtained by swinging the comb arm 93 away from the head actuator sub-assembly to release the flexure arms 34 gradually due to the tapered geometry of the tips of the comb teeth 92. As a result, the read/write heads 35 land gently upon outer landing zones and their respective disk surfaces with a predetermined preloading in accordance with the spring characteristics of the flexure arms. An up-standing housing 186 (Figure 3) is conveniently provided on the platform 42 at least partially to shelter the loading comb 90 when retracted from the head actuator sub-assembly.

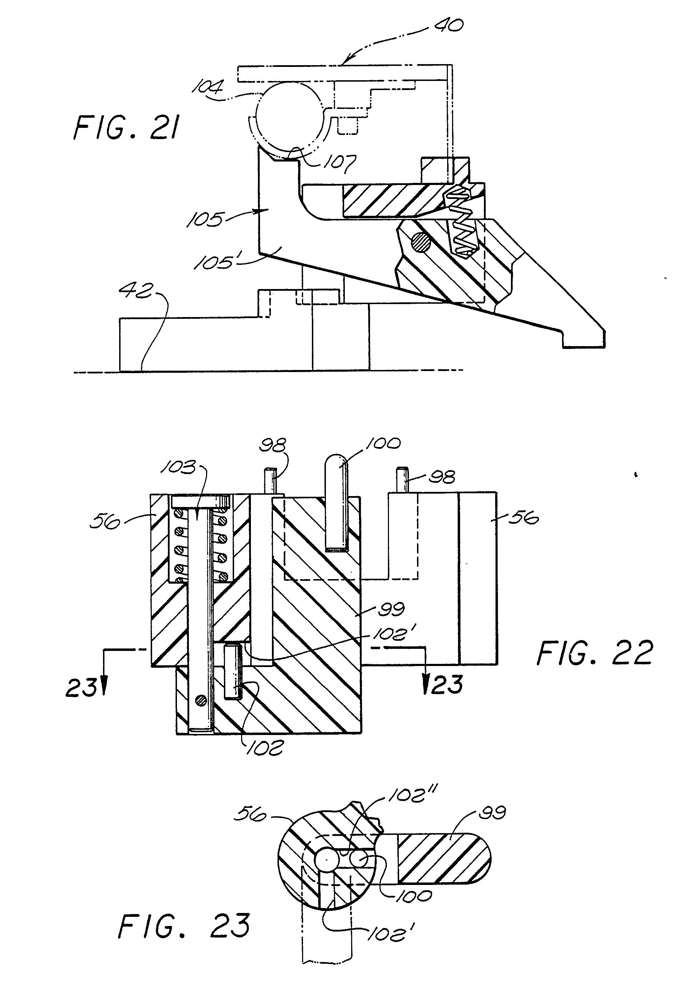

In addition, subsequent to movement of the disk sub-assembly 18 into registration with the head actuator sub-assembly 14, the solenoid bracket 105 is movable to displace the solenoid unit 40 into a desired mounting position relative to the head actuator sub-assembly. More particularly, as shown in Figures 17, 20 and 21, the solenoid bracket 105 is pivotably movable about the pivot pin 106 to displace the solenoid latch mechanism 104 to a position in close proximity with the actuator casing 30. In this regard, as viewed in Figure 21, the bracket 105 includes a spring loaded bracket arm 105' having a contoured seat 107 for cradled support of the latch mechanism 104.

The housing base 22 is then installed quickly and easily onto the above described components of the disk drive unit for secure connection thereto. More particularly, the housing base 22 comprises a contoured housing component having at least two alignment ports 190 for receiving up-standing cover pins 191 and 192 which guide the base 22 into the desired positional registry with the underlying sub-assemblies. One of these ports 190 in the housing base 22 is adapted to receive the upwardly projecting cover pin 191 which is supported in a fixed position at one side of the platform 42. The second cover pin 192 is conveniently carried by a spring loaded swing arm 193 for swinging displacement relative to the platform. This second pin 192 and the related swing arm 193 are shown in detail in Figure 18, with an over centre spring 194 controlling swing arm displacement between first and second positions. In a first position, as viewed in Figures 1, 2 and 13, the cover pin 192 is in an out of the way position to avoid interference with assembly of other components. However, when housing base installation is desired, the swing arm 193 is displaced to the second position (Figures 3 and 17) and retained thereat by the spring 194. A pair of stop posts 195 and 196 conveniently define the termination points for the two positions of swing arm displacement. Moreover, the swing arm 193 conveniently includes a side abutment 193' to block motion of the comb support arm 93 towards the head actuator sub-assembly 14 when the cover pin 192 is in the second position for engaging the housing base 22.

With the cover pin 192 moved to its second position near the head actuator sub-assembly 14, the housing base 22 is placed onto the underlying disk drive components by sliding the housing base downwardly with the pins 191 and 192 received in the ports 190. The cover pins 191 and 192 have sufficient height to ensure proper reception through the ports 190 prior to contact by the housing base 22 with either sub-assembly 14 or 18. Such arrangement advantageously ensures proper alignment among the components before physical contact therebetween. Moreover, for ease of assembly, the spindle leads 27 projecting upwardly from the disk drive spindle motor are advantageously gathered within a short straw 197 (Figures 3 and 14) for easy passage through an aligned opening 198 in the housing base. When the housing base 22 is properly seated upon the underlying components, appropriate nuts and/or screws are used for securely fastening the housing base to the head actuator sub-assembly 14 and to the disk sub-assembly 18, respectively.

Subsequent to installation of the housing base 22, the straw 197 is removed from the spindle leads 27 to permit the leads to be appropriately coupled by soldering or the like to a flex cable segment 27' or the like adapted for connection to power supply components of a fully assembled disk drive unit. In addition, a clamp arm 200 may be displaced into supporting engagement with the housing base 22, as best seen in Figures 3 and 11. This clamp arm 200 comprises a crank pivotably mounted on the platform 42 and biased by an over centre spring 202 (Figure 2) for movement between two different positions. In a first position, as shown in Figure 11, a clamp foot 204 is spaced above the various components being assembled on the platform fixture. However, after installation of the housing base 22, the clamp foot 204 can be descended to engage an upwardly presented surface of the housing base 22 to assist in holding the partially assembled disk drive components on the assembly station, as shown in Figure 3.

In the partially assembled stage shown in Figure 3, the platform 42 is rotated to an inverted position to facilitate final assembly of the various components on the housing base 22. More specifically, the lock lever 48 is released from the adjacent lock bracket 53 to permit platform inversion by rotation about the axis of the journal pins 46 (Figure 4). In the inverted position, the tooth 51 on the lock lever 48 is engaged with the second lock bracket 54 to lock the platform in place. As shown in Figure 19, the inverted platform exposes portions of the partially assembled disk drive unit through the platform opening 57. In this position, one or more scews 206 can be fastened quickly and easily into the housing base 22 to secure the solenoid unit 40 in place. In addition, appropriate screws 208 can be fastened through the magnet unit 39 to secure the unit to the housing base. Moreover, a position stop plate 210 of the magnet unit 39 (Figure 20) can be precisely adjusted to control the swing range of the read/write heads 35 relative to the disks 20.

While the platform 42 is in the inverted position, as shown in Figure 19, the flex cable segment attached to the spindle leads 27 of the spindle drive motor can be coupled to an appropriate power supply fitting 214 as shown schematically in Figure 19. This power supply fitting 214 provides electrical power to activate the spindle drive motor to spin up the disks 20 substantially to normal operating speed. When this occurs, the read/write heads 35 of the head actuator sub-assembly lift off or fly in slightly spaced relation to the associated disk surfaces. During such operation, the casing arms 32 can be grasped manually through the platform opening 57 and rotated relative to the disks to re-position the heads 35 at inner landing zones on the disks. Such displacement requires, of course, retraction of the alignment pin 76 by pulling upwardly on the now exposed head 85 of the alignment pin. A stop pin 218 (Figures 1 and 2) conveniently defines an end limit to head displacement to align the heads 35 at the disk inner landing zones. When this position is reached, the solenoid latch mechanism 104 can be adjusted as required to effectively park and lock the heads 35 in place.

When the read/write heads 35 are securely latched at the inner landing zone positions, the platform 42 is returned quickly and easily to the upright orientation, as viewed in Figures 1 to 18. Such return movement requires dis-connection of the spindle motor from the power supply fitting 214, together with appropriate operation of the lock lever 48 to permit platform rotation relative to the standards 44. The lock lever 48 is re-engaged with the bracket 53 to re-lock the platform 42 in the upright orientation. The clamp arm 200 is quickly and easily retracted from the housing base 22 to permit easy removal of the partially assembled disk drive unit from the assembly station 10 by straight lift off with respect to the cover pins 191 and 192. The partially assembled unit includes the head actuator and disk sub-assemblies 14 and 18 in precision registration ready for subsequent final assembly, for example, by mounting a housing cover (not shown) onto the housing base 22.

A variety of modifications and improvements to the disk drive assembly station 10 of the present invention will be apparent to those skilled in the art. For example, the clamp units securing the torque spindle support sleeves on the platform may be adjusted as required to accommodate re-location of the support sleeve reference surfaces according to the design characteristics of the particular disk drive unit to be assembled.

## Claims

1. A disk drive assembly station characterised by a head locating device (12) including means (60, 64) for supporting a head actuator sub-assembly of a disk drive unit, a disk locating device (16) including means (116, 122) for supporting a disk sub-assembly of a disk drive unit, and means (42, 62, 110, 112, 114, 118) mounting the head and the disk locating devices for relative movement towards and away from a predetermined relative position for placing a respective head actuator sub-assembly and a respective disk sub-assembly in precise registration with one another.

2. A disk drive assembly station according to claim 1 characterised in that the mounting means support the head locating device at a first location and support the disk locating device for movement towards and away from a second location in which the head locating device and the disk locating device are in the predetermined relative position.

3. A disk drive assembly station according to claim 2 characterised in that the disk locating device is lockable at the second location.

4. A disk drive assembly station according to any preceding claim characterised in that the head locating device comprises a support sleeve (60) providing a support face (61) at one end for supporting a head actuator sub-assembly, and a spindle (64) rotatably received within the support sleeve and having a threaded tip (72) for engaging a threaded bore within the head actuator sub-assembly.

5. A disk drive assembly station according to any preceding claim characterised in that the head locating device includes means (76, 77) for aligning a head actuator sub-assembly in a predetermined orientation relative to the means for supporting such head actuator assembly.

6. A disk drive assembly station according to any preceding claim characterised in that the head locating device includes a loading comb (90) having a plurality of teeth (92) movable. into engagement between head arms of a head actuator sub-assembly for maintaining heads mounted on the head arms in predetermined spaced relation.

7. A disk drive assembly station according to any preceding claim characterised in that the head locating device includes means (99, 100) for supporting a magnet unit of a head actuator sub-assembly.

8. A disk drive assembly station according to any preceding claim characterised in that the head locating device includes means (105) for supporting a solenoid unit of a head actuator sub-assembly.

9. A disk drive assembly station according to any preceding claim characterised in that the disk locating device comprises a support sleeve (116) providing a support face (120) at one end for supporting a disk sub-assembly, and a spindle (122) rotatably received within the support sleeve and having a threaded tip (124) for engaging within a threaded bore in a disk sub-assembly.

10. A disk drive assembly station according to any preceding claim characterised in that the disk locating device is mounted on parallel guide rails (114) for movement towards and away from the predetermined relative position.

11. A disk drive assembly station according to any preceding claim further characterised by a transfer tool (140) for carrying a disk sub-assembly, and a tool stand (154) for supporting the transfer tool with the disk sub-assembly aligned with the disk locating device.

12. A disk drive assembly station further characterised by guide means (191, 192) for guiding a housing base of a disk drive unit into seated relation with a head actuator sub-assembly on the head locating device and a disk sub-assembly on the disk locating device.

13. A disk drive assembly station according to any preceding claim characterised in that the mounting means comprise a common platform (42) for supporting the head locating device and the disk locating device, and in that the platform is invertable and has at least one opening (57) formed therein for exposing a head actuator sub-assembly on the head locating device when the platform is in the inverted condition.

14. A method of assembling a disk drive unit characterised by mounting a head actuator sub-assembly (14) on a head locating device (12), mounting a disk sub-assembly (18) on a disk locating device (16), relatively moving the head locating device and the disk locating device towards a predetermined relative position in which the head actuator sub-assembly and the disk sub-assembly are in precise registration with one another, and mounting a housing base (22) on the head actuator and disk sub-assemblies.

FIG. I

FIG. 2

EP 0 354 679 A2

FIG. 3

FIG. 4

FIG. 5

FIG. 6

FIG. 7

FIG. 8

FIG. 15

FIG. 9

FIG. 10

FIG. 18

FIG. 16

EP 0 354 679 A2

FIG. 11

FIG. 12

FIG. 13

EP 0 354 679 A2

FIG. 14

EP 0 354 679 A2

*FIG. 17*

EP 0 354 679 A2

FIG. 19

EP 0 354 679 A2

FIG. 20

FIG. 21

104
107
105
105'
42
40

FIG. 22

103
98
100
98
56
56
99
102'
102
23
23

FIG. 23

56
102"
99
100
102'